# EUROPEAN PATENT APPLICATION

(11) **EP 4 309 918 A1**
(43) Date of publication of application: **24.01.2024**
(21) Application number: 23178769.8
(22) Date of filing: 12.06.2023
(51) Int. Cl.: B60C 11/03, B60C 11/12, B29D 30/06

(54) **PNEUMATIC TIRE AND MOLD FOR MOLDING TIRE**

(30) Priority: 20.07.2022 JP 2022115464; 18.08.2022 JP 2022130484
(71) Applicant: TOYO TIRE CORPORATION, Itami-shi, Hyogo 6640847 (JP)
(72) Inventor: KAMADA, Nobuyuki, Itami-shi, 6640847 (JP)
(74) Representative: Balder IP Law, S.L.

(57) **Abstract**

A pneumatic tire (10) includes a tread (20) including a block (30). A sipe (40) is formed in the block (30), a first groove (41) extending from a surface of the tread (20) toward a bottom is formed in at least one wall surface (40A, 40B) of the sipe (40), and a bottom end of the first groove (41) faces a shoulder side (SH) in a tire axial direction (X).

## Description

### TECHNICAL FIELD

The present invention relates to a pneumatic tire including a block in which a sipe is formed, and a mold for molding a tire for molding the pneumatic tire.

### BACKGROUND

A pneumatic tire includes a tread as a portion to be in contact with a road surface. The tread includes a plurality of blocks. A sipe is formed in each block. The sipe is a narrow groove. With the sipe, hardness of the block can be adjusted, and a gripping force can be improved by increasing the number of edges of the block. The sipe in the pneumatic tire is molded using sipe blades provided in a mold for molding a tire.

For example, JP 2007-290152 A discloses a mold for molding a tire in which sipe blades are formed continuously by being folded back, and a surface facing inward in a tire radial direction is formed as a rough surface having a frictional force larger than that of a surface facing outward in the tire radial direction. JP H08-175115 A discloses a pneumatic tire in which irregularities are formed in a wall surface of a sipe, a friction coefficient between wall surfaces is improved, and a block is prevented from being greatly deformed.

The tire is required to have performance of absorbing and draining water on a wet road surface, or water on an icy and snowy road surface generated by melting due to friction with the tire. In configurations of the sipe of the pneumatic tire and the mold for molding a tire disclosed in JP 2007-290152 A and JP H08-175115 A, although the friction coefficient between the wall surfaces of the sipe is improved, an improvement in water absorption performance and water drainage performance is not considered.

### SUMMARY

Therefore, an object of the present invention is to provide a pneumatic tire and a mold for molding a tire that are capable of improving water absorption performance and water drainage performance.

The pneumatic tire according to the present invention is a pneumatic tire including a tread including a block. A sipe is formed in the block, a first groove extending from a surface of the tread toward a bottom is formed in at least one wall surface of the sipe, and a bottom end of the first groove faces a shoulder side in a tire axial direction.

According to the pneumatic tire and the mold for molding a tire of the present invention, the water absorption performance and the water drainage performance can be improved.

### BRIEF DESCRIPTION OF DRAWINGS

FIG. 1 is a schematic plan view showing blocks of a pneumatic tire according to an example of an embodiment;
FIG. 2 is an enlarged view of a portion A in FIG. 1;
FIG. 3 is a perspective view showing a partially cut-off block;
FIG. 4 is a view seen from an arrow B in FIG. 2;
FIG. 5 is a view of a block on an equator CL as seen from the arrow B in FIG. 2;
FIG. 6 is a schematic view showing a mold for molding a tire; and
FIG. 7 is a perspective view showing a sipe blade.

### DESCRIPTION OF EMBODIMENTS

Hereinafter, an example of an embodiment according to the present invention will be described in detail. In the following description, specific shapes, materials, directions, numerical values, and the like are examples for ease of understanding of the present invention, and can be appropriately changed according to applications, purposes, specifications, and the like.

### <Pneumatic Tire>

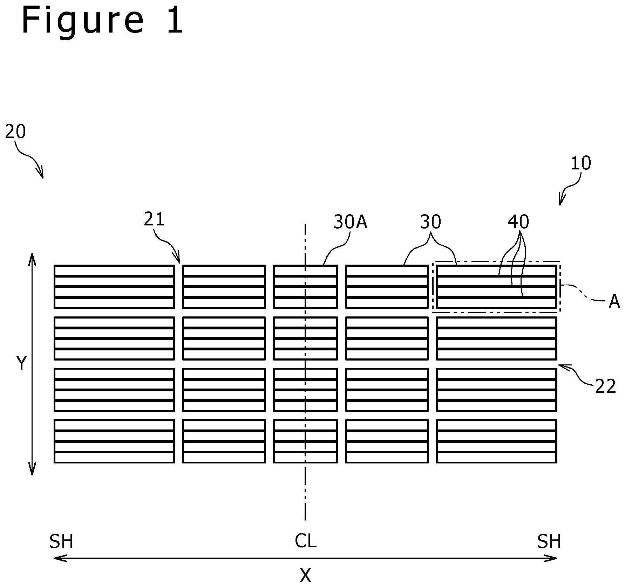

A pneumatic tire 10 according to an example of an embodiment will be described with reference to FIG. 1.

As shown in FIG. 1, the pneumatic tire 10 includes a tread 20 including blocks 30. Sipes 40 are formed in each block 30. According to the pneumatic tire 10, water absorption performance and water drainage performance can be improved, as will be described in detail later.

Hereinafter, each member will be described with respect to a tire axial direction X, a tire circumferential direction Y, and a tire radial direction Z. In the tire axial direction X, a central portion in the tire axial direction X may be referred to as an equator CL, and each outer side in the tire axial direction X may be referred to as a shoulder side SH.

The tread 20 is a portion in the pneumatic tire 10 to be in contact with a road surface. The tread 20 includes a plurality of blocks 30 divided by main grooves 21 and sub grooves 22. The blocks 30 are each formed in a rectangular shape having a length in the tire axial direction X decreasing toward the equator CL in a plan view, and are aligned in the tread 20. However, a shape of the blocks 30 according to the present embodiment is not limited thereto, the blocks 30 may have a rhomboid shape or a parallelogram shape as long as the blocks 30 are divided by the main grooves 21 and the sub grooves 22, and the shape is not particularly limited.

In the present embodiment, since five blocks 30 are disposed in the tire axial direction X, the plurality of blocks 30 include blocks 30A disposed on the equator CL. When an even number of blocks 30 are disposed in the tire axial direction X, no block 30 is disposed on the equator CL.

Each main groove 21 is a groove extending along the tire circumferential direction Y. The main groove 21 is formed linearly along the tire circumferential direction Y. Each sub groove 22 is a groove extending along the tire axial direction X. The sub groove 22 is formed linearly along the tire axial direction X. However, a shape of the main groove 21 or a shape of the sub groove 22 according to the present embodiment is not limited thereto, the main groove 21 may be inclined with respect to the tire circumferential direction Y, and the sub groove 22 may be inclined with respect to the tire axial direction X.

### <Sipe>

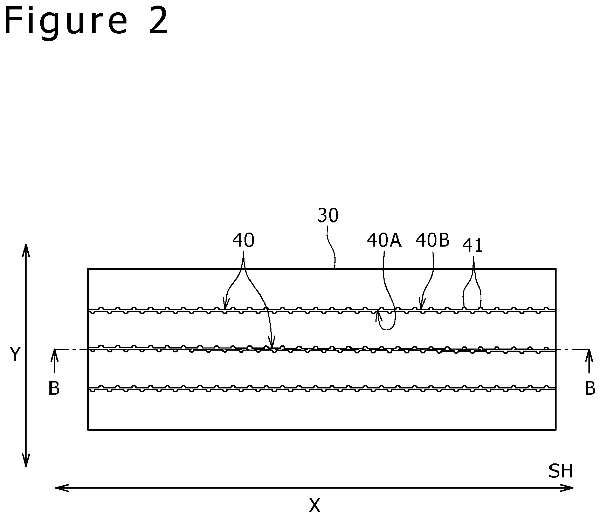

The sipes 40 will be described with reference to FIG. 2.

The sipes 40 are formed in the block 30. Each sipe 40 is a groove extending in the tire axial direction X. A depth of a groove in the sipe 40 is 60% to 80% of a length of the block 30 in the tire radial direction Z. The sipe 40 is formed linearly along the tire axial direction X. Three sipes 40 are formed at equal intervals in the tire circumferential direction Y of the block 30.

However, the number of sipes 40 and a shape of the sipe 40 according to the present embodiment are not limited thereto, and three to five sipes 40 may be formed in the block 30. The sipe 40 may be inclined with respect to the tire axial direction X, may be formed in a waveform shape, or may be formed in a zigzag shape.

According to the sipes 40, hardness of the block 30 in the tread 20 can be adjusted by changing the shape or the number of the sipes 40. The number of edges of the block 30 is increased by the sipes 40, and a gripping force of the pneumatic tire 10 can be improved. Here, each edge is a corner portion formed on a surface of the tread 20. Further, water on a wet road surface or on an icy and snowy road surface can be absorbed by the sipes 40, the blocks 30 can be brought into close contact with the road surface or ice, and the gripping force of the pneumatic tire 10 can be improved.

### <First Groove>

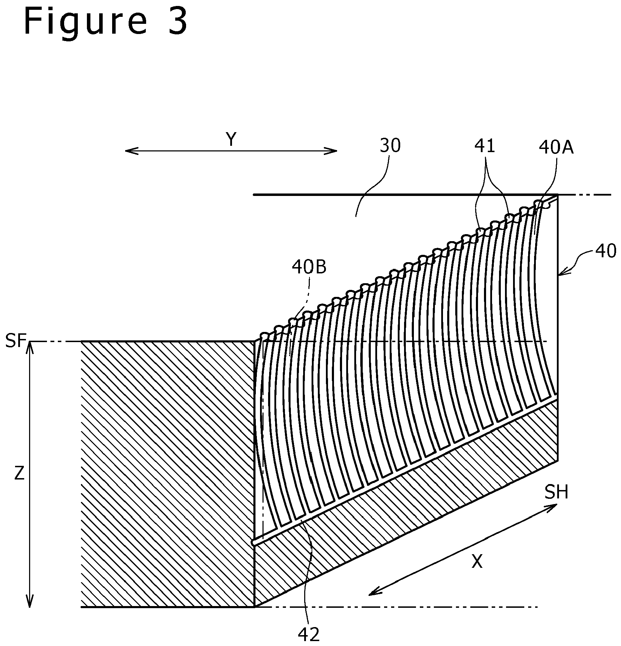

First grooves 41 will be described with reference to FIGS. 2 to 4. In FIG. 3, a part of the block 30 in which a wall surface 40B of the sipe 40 is formed is shown sliced off.

A plurality of first grooves 41 are formed in both wall surfaces 40A and 40B of the sipe 40. Each first groove 41 is a groove extending from a surface SF toward a bottom in the tire radial direction Z. Here, both the wall surfaces 40A and 40B of the sipe 40 are surfaces of the sipe 40 facing each other in the tire circumferential direction Y. According to the first grooves 41, water on the surface SF of the tread 20 can be absorbed to a bottom of the sipe 40, and a water absorption effect of the sipe 40 can be improved.

However, a configuration in which the first grooves 41 are formed in both the wall surfaces 40A and 40B of the sipe 40 is not limited to the first grooves 41 according to the present embodiment. The first grooves 41 may be formed only in one wall surface 40A of the sipe 40, or may be formed only in the other wall surface 40B of the sipe 40.

When the first grooves 41 are formed in both the wall surfaces 40A and 40B of the sipe 40 as in the present embodiment, it is preferable that the first grooves 41 do not face each other. More specifically, it is preferable that the first grooves 41 formed in the wall surface 40A face the other wall surface 40B, and the first grooves 41 formed in the other wall surface 40B face the wall surface 40A. However, there is no limitation to the first grooves 41 according to the present embodiment described above, and the first grooves 41 may face each other, and parts of the first grooves 41 may face each other.

With a configuration in which the first grooves 41 described above do not face each other, more water absorption paths are formed, and the water absorption performance of the sipe 40 can be improved. In addition, with the configuration in which the first grooves 41 do not face each other, more edges are formed on the surface of the tread 20, and thus a braking force is improved.

An end of each first groove 41 on the surface SF penetrates a surface of the block 30. Accordingly, the water on the surface of the tread 20 can be reliably absorbed by the first grooves 41, and the water absorption effect of the sipe 40 can be improved.

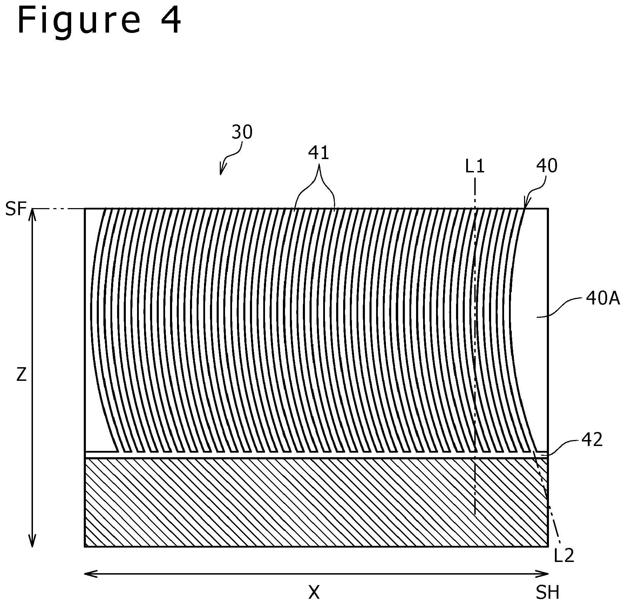

A bottom end of the first groove 41 faces the shoulder side SH in the tire axial direction X. More specifically, as shown in FIGS. 3 and 4, an extension line L1 from the bottom end of the first groove 41 is inclined to the shoulder side SH in the tire axial direction X when seen from the tire circumferential direction Y (an arrow B in FIG. 2). Accordingly, it is easy for the water absorbed by the first grooves 41 to drain to the shoulder side SH in the tire axial direction X. As a result, the water drainage performance of the pneumatic tire 10 can be improved. Here, the bottom end of the first groove 41 communicates with a second groove 42 to be described in detail later.

The first groove 41 is formed in an arc shape swelling toward the equator CL in the tire axial direction X. Accordingly, since a length of the first groove 41 can be increased, the water absorption paths can be lengthened. However, there is no limitation to the first grooves 41 according to the present embodiment, and the first groove 41 may be formed in a linear shape or may be formed in an inclined manner such that the bottom end faces the shoulder side SH in the tire axial direction X, as described above.

The bottom end of the first groove 41 is positioned closer to the shoulder side SH in the tire axial direction X than the end on the surface SF. More specifically, as shown in FIG. 4, as seen from the tire circumferential direction Y (the arrow B in FIG. 2), when a reference line L2 is drawn along the tire radial direction Z from the surface SF of the first groove 41, the bottom end of the first groove 41 is positioned closer to the shoulder side SH in the tire axial direction X than the reference line L2. As is clear from FIG. 4, the first groove 41 may pass through the equator CL side in the tire axial direction X with respect to the reference line L2.

A shape of the first groove 41 according to the present embodiment is formed in a semicircular shape in a cross-sectional view perpendicular to the tire radial direction Z (hereinafter, a cross-sectional shape). However, the shape of the first groove 41 is not limited to the cross-sectional shape according to the present embodiment, and may be a trapezoidal shape or a quadrangular shape.

The length of the first groove 41 in the tire radial direction Z according to the present embodiment (hereinafter referred to as a groove length) is substantially the same as a length of the sipe 40 in the tire radial direction Z (hereinafter referred to as a sipe depth), and may be 50% to 100% of the sipe depth from the surface SF of the tread 20.

The length of the first groove 41 in the tire circumferential direction Y (hereinafter referred to as a groove depth) is preferably 70 µm or more. The groove depth of the first groove 41 is preferably 50% to 70% of a width of the sipe 40 (a length in the tire circumferential direction Y). For example, when the groove depth of the first groove 41 exceeds 70% of the width of the sipe 40, the amount of rubber in the tread 20 is reduced, and flexural rigidity of the block 30 during braking or driving is reduced.

An interval between the first grooves 41 is three to eight times and preferably four to six times the groove depth of the first groove 41 described above. For example, when the interval between the first grooves 41 is less than three times the groove depth of the first groove 41, since the groove depth of the first groove 41 depends on the width of the sipe 40 as described above, an effective width of the sipe 40 cannot be secured. When the interval between the first grooves 41 is eight times or more the groove depth of the first groove 41, the water absorption effect may not be attained.

### <Second Groove>

The second groove 42 will be described with reference to FIGS. 3 and 4.

The second groove 42 is a groove extending along the tire axial direction X on bottom sides of both the wall surfaces 40A and 40B of the sipe 40 in the tire radial direction Z. According to the second groove 42, the water absorbed by the first grooves 41 can be drained to the shoulder side SH in the tire axial direction X.

The second groove 42 is formed linearly along the tire axial direction X. The second groove 42 communicates with the bottom end of the first groove 41. However, a shape of the second groove 42 is not limited to that according to the present embodiment, and the second groove 42 may be inclined with respect to the tire axial direction X. Both ends of the second groove 42 in the tire axial direction X penetrate respective wall surfaces of the block 30 in the tire axial direction X. Accordingly, the water absorbed by the first grooves 41 can be reliably drained.

When the second groove 42 is separately formed in both the wall surfaces 40A and 40B of the sipe 40, the second grooves 42 may face each other. The second groove 42 may be formed only in a wall surface in which the first groove 41 is formed. Specifically, when the first groove 41 is formed only in the wall surface 40A of the sipe 40, the second groove 42 may be formed only in the wall surface 40A, and when the first groove 41 is formed only in the other wall surface 40B of the sipe 40, the second groove 42 may be formed only in the other wall surface 40B.

### <Block on Equator>

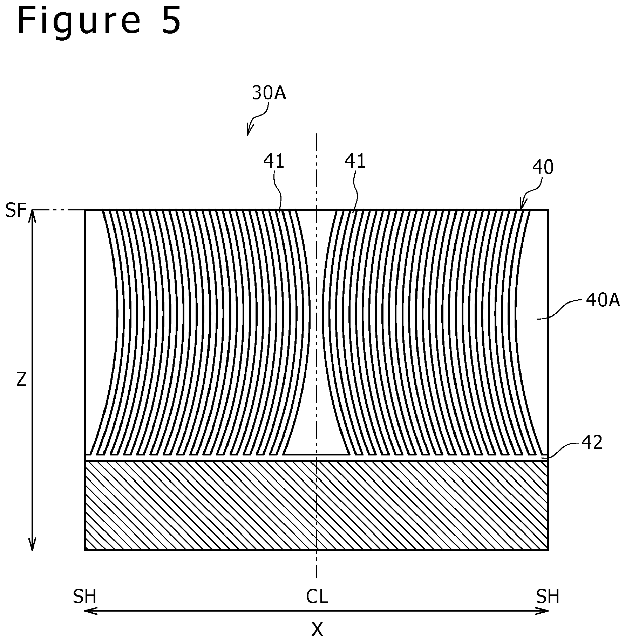

The blocks 30A on the equator CL will be described with reference to FIG. 5.

The first grooves 41 are formed in both the wall surfaces 40A and 40B of the sipe 40 formed in the block 30A disposed on the equator CL in the tire axial direction X. Here, regarding the tire axial direction X, when the shoulder sides SH are defined as left and right sides toward a paper surface, the first groove 41 includes a groove in which the bottom end of the first groove 41 faces a right side and a groove in which the bottom end faces a left side.

### <Effect>

According to the pneumatic tire 10 of the present embodiment, the water absorption performance and the water drainage performance can be improved. More specifically, the water absorption performance can be improved by forming the first grooves 41 extending from the surface SF toward the bottom in both the wall surfaces 40A and 40B of the sipe 40 in the tire radial direction Z. The bottom end of the first groove 41 faces the shoulder side SH in the tire axial direction X and communicates with the second groove 42 extending along the tire axial direction X, whereby the water absorbed by the first groove 41 can be reliably drained by the second groove 42.

### <Mold for Molding Tire>

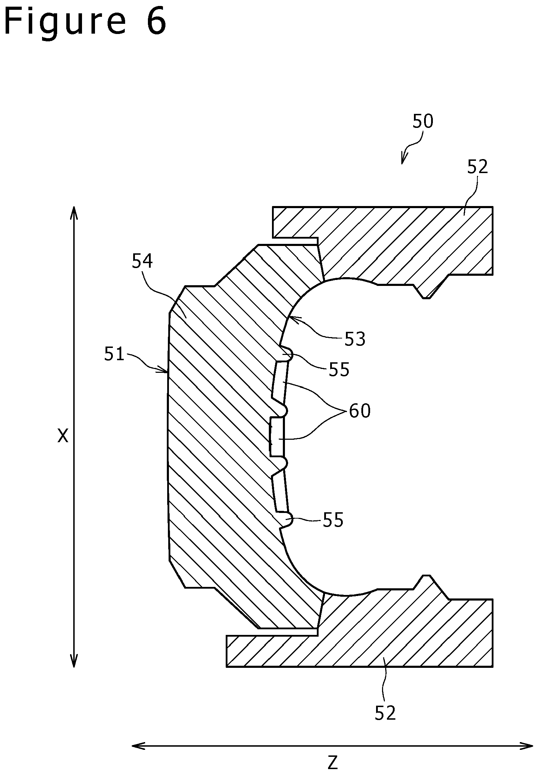

A mold 50 as an example of an embodiment will be described with reference to FIG. 6.

The mold 50 is a mold for molding the pneumatic tire 10 described above. The pneumatic tire 10 includes the tread 20 including the blocks 30 in which the sipes 40 are formed as described above, and sidewalls (not shown) forming side surfaces. According to the mold 50, the pneumatic tire 10 capable of improving water absorption performance and water drainage performance can be molded.

Hereinafter, each member will be described with respect to the tire axial direction X, the tire circumferential direction Y, and the tire radial direction Z of the above-described pneumatic tire 10 molded by using the mold 50.

As shown in FIG. 6, the mold 50 includes a tread mold 51 for molding a surface of the tread 20 of the pneumatic tire 10, and a pair of side molds 52 for molding surfaces of the sidewalls.

The tread mold 51 includes a main body 54 having a tread molding surface 53, protrusions 55 protruding from the tread molding surface 53, and sipe blades 60 protruding from the tread molding surface 53 and provided between the protrusions 55.

The main body 54 is made of a metal material, for example, an aluminum alloy. As the aluminum alloy, for example, an AC4-based alloy or an AC7-based alloy is preferably used. The protrusions 55 are portions for molding the main grooves 21 in the pneumatic tire 10. The protrusions 55 are made of a metal material that is the same as that forming the main body 54.

### <Sipe Blade>

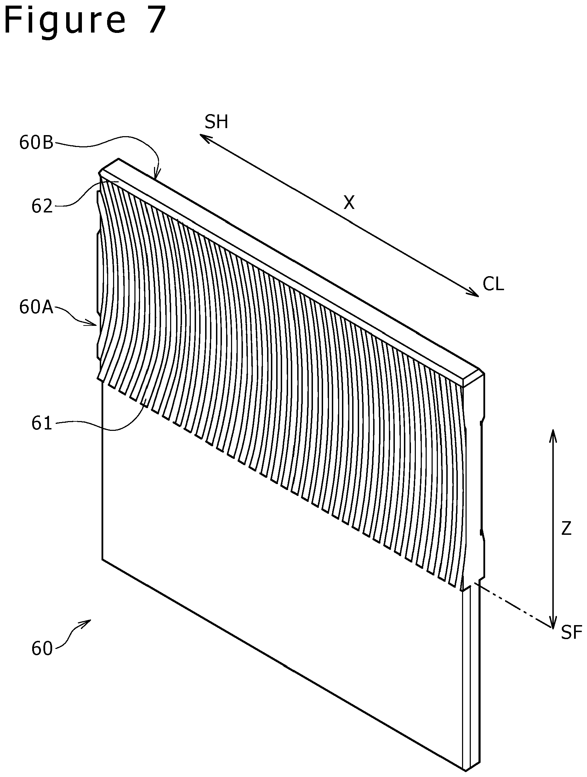

The sipe blades 60 according to the example of the embodiment will be described with reference to FIG. 7.

The sipe blades 60 mold the sipe 40 of the pneumatic tire 10. Each sipe blade 60 protrudes from the tread molding surface 53 between the protrusions 55 in the tire radial direction Z. The sipe blade 60 has a flat plate shape and may be made of a metal material, for example, stainless steel. Preferable examples of the stainless steel include SUS303, SUS304, SUS630, and SUS631. When a three-dimensional molding machine is used, SUS304L, 17-4PH corresponding to SUS630, or the like is preferably used.

In a general processing method for the sipe blade 60, a shape thereof is formed using a press molding machine. In the processing method, when there is a change in shape in a thickness direction of the sipe blade 60 according to the present invention, the shape thereof is formed by cutting using machining. By using the three-dimensional molding machine, a complicated shape that is difficult to attain by machining can be formed.

### <First Protrusion>

A plurality of first protrusions 61 are formed on both surfaces 60A and 60B of the sipe blade 60. Each first protrusion 61 is a portion for forming the first groove 41 of the sipe 40 of the pneumatic tire 10 described above. The first protrusion 61 is a protrusion extending from the surface SF of the tread 20 toward a bottom in the tire radial direction Z.

A bottom end of the first protrusion 61 faces the shoulder side SH in the tire axial direction X. The first protrusion 61 is formed in an arc shape swelling toward the equator CL in the tire axial direction X. Further, the bottom end of the first protrusion 61 is positioned closer to the shoulder side SH in the tire axial direction X than an end of the tread 20 on a surface SF side (see L1 in FIG. 4).

A shape of the first protrusion 61 according to the present embodiment is formed in a semicircular shape in a cross-sectional view perpendicular to a longitudinal direction. A protrusion height of the first protrusion 61 (a length in the tire circumferential direction Y) is preferably 70 µm or more. The protrusion height of the first protrusion 61 is preferably 50% to 70% of a thickness of the sipe blade 60 (the length in the tire circumferential direction Y). An interval between the first protrusions 61 is three to eight times and preferably four to six times the protrusion height of the first protrusion 61 described above.

### <Second Protrusion>

A second protrusion 62 is a portion for forming the second groove 42 of the sipe 40 of the pneumatic tire 10 described above. The second protrusion 62 is a protrusion extending along the tire axial direction X on bottom sides of both the surfaces 60A and 60B of the sipe blade 60 in the tire radial direction Z. The second protrusion 62 communicates with the bottom end of the first protrusion 61. The second protrusion 62 is formed linearly along the tire axial direction X.

However, the present invention is not limited to the above-described embodiments and modifications thereof, and various modifications and improvements can be made within the scope of matters described in the claims of the present application.

## Claims

1. A pneumatic tire (10) comprising:
a tread (20) including a block (30), wherein
a sipe (40) is formed in the block (30),
a first groove (41) extending from a surface (SF) of the tread (20) toward a bottom is formed in at least one wall surface (40A, 40B) of the sipe (40), and
a bottom end of the first groove (41) faces a shoulder side (SH) in a tire axial direction (X).

2. The pneumatic tire (10) according to claim 1, wherein
the first groove (41) is formed in an arc shape swelling toward an equator (CL) in the tire axial direction (X).

3. The pneumatic tire (10) according to claim 1, wherein
a second groove (42) extending along the tire axial direction (X) is formed on a bottom side of the sipe (40).

4. The pneumatic tire (10) according to any one of claims 1 to 3, wherein
the first groove (41) is formed in both wall surfaces (40A, 40B) of the sipe (40), and
the first grooves (41) do not face each other in the sipe (40).

5. A mold for molding a tire (50) comprising:
a sipe blade (60) that forms a sipe (40) in a block (30) of a tread (20) of a pneumatic tire (10), wherein
a first protrusion (61) extending from a surface (SF) of the tread (20) toward a bottom is formed on at least one surface (60A, 60B) of the sipe blade (60), and
a bottom end of the first protrusion (61) faces a shoulder side (SH) in a tire axial direction (X).

6. The mold for molding a tire (50) according to claim 5, wherein
a second protrusion (62) extending along the tire axial direction (X) is formed on a bottom side of the sipe blade (60).
